(19) Europäisches Patentamt
European Patent Office
Office européen des brevets

(11) **EP 4 415 919 B1**

(12) **EUROPÄISCHE PATENTSCHRIFT**

(45) Veröffentlichungstag und Bekanntmachung des Hinweises auf die Patenterteilung:
**06.05.2026 Patentblatt 2026/19**

(21) Anmeldenummer: **22800144.2**

(22) Anmeldetag: **30.09.2022**

(51) Internationale Patentklassifikation (IPC):
**B23K 26/06** $^{(2014.01)}$     **B23K 26/064** $^{(2014.01)}$
**B23K 26/073** $^{(2006.01)}$     **B23K 26/082** $^{(2014.01)}$
**B23K 101/00** $^{(2006.01)}$     **B23K 103/20** $^{(2006.01)}$
**B23K 103/22** $^{(2006.01)}$     **B23K 26/067** $^{(2006.01)}$

(52) Gemeinsame Patentklassifikation (CPC):
**B23K 26/0626; B23K 26/064; B23K 26/0673; B23K 26/0734; B23K 26/082; H01M 50/147; H01M 50/528; H01M 50/534;** B23K 2101/006; B23K 2103/20; B23K 2103/22

(86) Internationale Anmeldenummer:
**PCT/EP2022/077365**

(87) Internationale Veröffentlichungsnummer:
**WO 2023/061783 (20.04.2023 Gazette 2023/16)**

(54) **VERFAHREN ZUM LASERSCHWEISSEN EINES WERKSTÜCKS MIT SCHNELLEM WECHSEL ZWISCHEN SCHWEISSZONEN MIT UNTERSCHIEDLICHEN ZU SCHWEISSENDEN MATERIALIEN**

METHOD FOR LASER WELDING A WORKPIECE, THE METHOD SWITCHING QUICKLY BETWEEN WELDING ZONES HAVING DIFFERENT MATERIALS TO BE WELDED

PROCÉDÉ DE SOUDAGE LASER D'UNE PIÈCE, À CHANGEMENT RAPIDE ENTRE DES ZONES DE SOUDAGE COMPORTANT DES MATÉRIAUX À SOUDER DIFFÉRENTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.10.2021 DE 102021126754**

(43) Veröffentlichungstag der Anmeldung:
**21.08.2024 Patentblatt 2024/34**

(73) Patentinhaber: TRUMPF Laser- und Systemtechnik SE
**71254 Ditzingen (DE)**

(72) Erfinder: **BOCKSROCKER, Oliver**
**74343 Sachsenheim (DE)**

(74) Vertreter: **Trumpf Patentabteilung TRUMPF SE + Co. KG**
**Johann-Maus-Straße 2**
**71254 Ditzingen (DE)**

(56) Entgegenhaltungen:
**CN-A- 102 637 835        CN-U- 207 353 371**
**DE-A1- 102019 218 398**

**Beschreibung**

Die Erfindung betrifft ein Verfahren zum Laserschweißen eines Werkstücks,

> wobei ein Laserstrahl mittels einer Scanneroptik auf das Werkstück gerichtet wird,
> wobei mit dem Laserstrahl in beliebiger Reihenfolge zumindest in einer ersten Schweißzone eine erste Komponente an ein Grundbauteil geschweißt wird und in einer zweiten Schweißzone eine zweite Komponente an das Grundbauteil geschweißt wird,
> und wobei die erste Komponente und die zweite Komponente zumindest im Bereich der ersten und zweiten Schweißzone aus unterschiedlichen Materialien bestehen.

Laserschweißen ist ein leistungsfähiges Verfahren zum Fügen von Werkstückteilen zu einem Werkstück. Das Laserschweißen wird vor allem eingesetzt, wenn eine hohe Schweißgeschwindigkeit, eine schmale Schweißnaht oder auch ein geringer thermischer Verzug im Werkstück gewünscht werden.

In vielen Fällen sollen beim Laserschweißen mehrere Komponenten an ein Grundbauteil angeschweißt werden. Beispielsweise besteht bei Zellen für Elektrobatterien die Kathode oft aus Aluminium (Al) oder einer Aluminiumlegierung, und die Anode aus Kupfer (Cu) oder einer Kupferlegierung, und diese beiden Komponenten sollen an ein gemeinsames Grundbauteil der Zelle angeschweißt werden.

Üblicherweise wird für das Laserschweißen das zu schweißende Werkstück (bzw. dessen Werkstückteile, die miteinander verschweißt werden sollen) vor einer Scanneroptik angeordnet. Die Scanneroptik umfasst in der Regel einen Eingang für Laserstrahlung, an dem typischerweise ein Lichtleitkabel angeschlossen wird, diverse optische Elemente (meist eine Kollimationslinse oder Kollimationslinsensystem und eine Fokussierlinse oder Fokussierlinsensystem) und eine verstellbare Ablenkeinrichtung (meist einen mit Piezoelementen verstellbaren Spiegel), mit der die Ausrichtung des aus der Scanneroptik austretenden Laserstrahls relativ zum Werkstück verändert werden kann, insbesondere um den Laserstrahl entlang einer gewünschten Schweißbahn (Schweißnaht) zu führen oder auch um den Laserstrahl nacheinander auf unterschiedliche Schweißzonen auszurichten, an denen die unterschiedlichen Komponenten an das Grundbauteil angeschweißt werden.

Für das Laserschweißen von Komponenten unterschiedlicher Materialien sind in vielen Fällen unterschiedliche Spotgrößen des schweißenden Laserstrahls vorteilhaft, insbesondere um Spritzer und Poren zu minimieren. Zu diesem Zwecke kann der Abstand der Scanneroptik bzw. des Laser-Bearbeitungskopfs zum Werkstück in Strahlausbreitungsrichtung verändert werden. Wenn beispielsweise in einer ersten relativen Stellung der Scanneroptik zum Werkstück sich die dem Laserstrahl zugewandte Werkstückoberfläche in der Fokusebene des Laserstrahls befindet, ist die Spotgröße des Laserstrahls auf der Werkstückoberfläche am kleinsten. Durch relatives Herausfahren der Werkstückoberfläche aus der Fokusebene in eine zweite relative Stellung kann die Spotgröße des Laserstrahls auf der Werkstückoberfläche vergrößert werden.

Das Verfahren der Scanneroptik relativ zum Werkstück ist jedoch aufwändig und benötigt relativ viel Zeit. Wenn also an einem Werkstück Komponenten verschiedener Materialien an ein gemeinsames Grundbauteil hintereinander angeschweißt werden sollen, wird bei oben beschriebenen Vorgehen die Fertigung des Werkstücks vergleichsweise langsam; bei der Fertigung von solchen Werkstücken in Serie tritt die durch eine Verstellung der Scanneroptik bedingte Verzögerung bei jedem Werkstück auf.

Aus der DE 10 2010 003 750 A1 ist es bekannt, die Strahlprofilcharakteristik eines Laserstrahls mittels einer Multiclad-Faser umfassend zumindest eine Kernfaser und eine Ringfaser zu verändern. Ein Ausgangslaserstrahl wird zu einem Anteil (Kernanteil) in eine Kernfaser und zu einem weiteren Anteil (Ringanteil) in eine Ringfaser eingespeist; die Anteile können beispielsweise durch die Position eines optischen Keils im Ausgangslaserstrahl vor dem Faserende der Multiclad-Faser verändert werden. Mit der Multiclad-Faser kann entsprechend ein umgeformter Laserstrahl mit einem Kernstrahl und einem Ringstrahl mit einstellbaren Anteilen bereitgestellt werden.

Die CN 207 353 371 U, die die Grundlage für den Oberbegriff des Anspruchs 1 bildet, zeigt eine Verbindungsstruktur für Batterien, insbesondere von elektrischen Fahrzeugen. Die Verbindungsstruktur umfasst beispielhaft zwei Verbindungsbleche, die mittels Laserschweißen mit einer Deckplatte verbunden sein können.

Aus der CN 102 637 835 A ist eine Abdeckplatte für eine Lithium-Ionen-Batterie bekannt. Zumindest ein Anschlusspol kann mittels Laserschweißen mit der Abdeckplatte verbunden sein.

In der DE 10 2019 218398 A1 ist ein Verfahren zum Fügen von Stromschienen offenbart, wobei die Stromschienen durch Laserschweißen miteinander verbunden werden.

Aufgabe der Erfindung

Es ist Aufgabe der Erfindung, ein Verfahren zum Laserschweißen eines Werkstücks vorzustellen, mit dem die Fertigung von Werkstücken, wobei Komponenten aus unterschiedlichen Materialien auf ein Grundbauteil aufgeschweißt werden, beschleunigt werden kann.

Beschreibung der Erfindung

Diese Aufgabe wird erfindungsgemäß gelöst durch ein Verfahren der eingangs genannten Art, das dadurch gekennzeichnet ist,

dass eine Laserenergie des Laserstrahls zumindest zwischen einem Kernanteil, entsprechend einem Kernstrahl des Laserstrahls, und einem Ringanteil, entsprechend einem Ringstrahl, der den Kernstrahl umgibt, veränderlich aufteilbar ist, und dass die Aufteilung der Laserenergie auf den Kernanteil und den Ringanteil beim Schweißen der ersten Schweißzone und beim Schweißen der zweiten Schweißzone unterschiedlich gewählt wird.

Im Rahmen der Erfindung ist es vorgesehen, die Aufteilung der Laserenergie auf einen Kernanteil und einen Ringanteil beim Laserschweißen von wenigstens zwei Komponenten verschiedenen Materials auf ein gemeinsames Grundbauteil unterschiedlich zu wählen. Durch die Veränderung der Aufteilung der Laserleistung zwischen Kernanteil und Ringanteil ist es möglich, die effektive Spotgröße des schweißenden Laserstrahls auf der Oberfläche des Werkstücks, die jeweils dem Laserstrahl zugewandt ist, zu verändern bzw. einzustellen. Dadurch kann eine Anpassung der Spotgröße an die Gegebenheiten in den verschiedenen Schweißzonen bzw. an den verschiedenen Komponenten, und insbesondere an deren unterschiedliche Materialien, vorgenommen werden. Gleichzeitig erfolgt auch eine Veränderung bzw. Einstellung des Intensitätsprofils des (gesamten) Laserstrahls bei der Bearbeitung. Beides kann dazu genutzt werden, die Qualität des Laserschweißens an den unterschiedlichen Schweißzonen bzw. an den unterschiedlichen Komponenten zu optimieren, und insbesondere Spritzer und Poren zu minimieren.

Für diese Veränderungen bzw. Einstellungen ist es nicht nötig, die Position der Scanneroptik zu verändern, was aufwändig und zeitintensiv wäre. Im Rahmen der Erfindung wird daher während des Schweißens der ersten und zweiten Schweißzone, und insbesondere auch bei einem Wechsel zwischen den Schweißzonen, die Position der Scanneroptik relativ zum Werkstück bevorzugt konstant gehalten. Alternativ kann zur Veränderung der (effektiven) Spotgröße beim Wechsel der Schweißzonen eine Kombination aus einem (relativen) Verfahren von Werkstück und Scanneroptik sowie einer Umschaltung der Aufteilung der Laserenergie zwischen Kernanteil und Ringanteil angewandt werden; in diesem Fall kann eine erhebliche Verkürzung des (relativen) Verfahrwegs erreicht werden, was zu einer entsprechenden Verkürzung der Nebenzeit für den Schweißzonenwechsel führt und daher insgesamt das Schweißverfahren auch noch erheblich beschleunigen kann. Die Veränderung der Aufteilung der Laserleistung ist schnell und mit geringem Aufwand möglich, beispielsweise durch geringfügiges Verfahren eines optischen Keils, und verursacht insbesondere keine merkliche Nebenzeit.

Die effektive Spotgröße eines Laserstrahls oder Strahlanteils (z.B. eines gesamten Laserstrahls umfassend Kernanteil und Ringanteil, oder eines Kernstrahls allein, oder eines Ringstrahls allein) kann nach dem 86%-Kriterium bestimmt werden. Nach dem 86%-Kriterium ist die Spotgröße eines Laserstrahls durch den Durchmesser einer (mit dem Laserstrahl koaxialen) Kreisfläche definiert, innerhalb der 86% der Laserleistung des Laserstrahls zu finden ist.

Durch Verändern der effektiven Spotgröße über die Änderung der Aufteilung der Laserenergie auf Kernanteil und Ringanteil ist es möglich, die bei vielen Anwendungen wichtige Nahtbreite (Breite der Schweißnaht quer zur Vorschubrichtung) einfach und schnell einzustellen, insbesondere passend für die unterschiedlichen Materialien bei den unterschiedlichen Komponenten. Beispielsweise kann für Kathoden auf Al-Basis eine vergleichsweise breite Naht gewählt werden und für Anoden auf Cu-Basis eine vergleichsweise schmale Naht gewählt werden, insbesondere um den unterschiedlichen Schmelze-Eigenschaften (Viskositäten und Benetzungseigenschaften) der beteiligten Materialien Rechnung zu tragen. Das erfindungsgemäße Verfahren bzw. die Anpassung der Spotgröße kann insbesondere dazu genutzt werden, um in den verschiedenen Schweißzonen bzw. bei den verschiedenen Komponenten eine gleiche Einschweißtiefe zu erreichen. Ebenso können Schweißfehler minimiert werden, insbesondere Spritzer und Poren.

Für eine Vergrößerung der Nahtbreite/Spotgröße wird der Ringanteil im Vergleich zum Kernanteil erhöht. Für eine Verkleinerung der Nahtbreite/Spotgröße wird der Ringanteil im Vergleich zum Kernanteil verringert. Auf diese Weise kann die effektive Spotgröße im Wesentlichen in einem Bereich zwischen der Spotgröße des Ringanteils (allein) und der Spotgröße des Kernanteils (allein) verstellt werden. Man beachte, dass durch die Veränderung der Aufteilung der Laserenergie auf Kernanteil und Ringanteil die Spotgröße des Kernanteils und die Spotgröße des Ringanteils jeweils nicht verändert werden. In einer besonders einfachen Variante des erfindungsgemäßen Verfahrens bleiben entsprechend die Spotgröße des Kernstrahls und die Spotgröße des Ringstrahls konstant, wenn zwischen der ersten Schweißzone und der zweiten Schweißzone gewechselt wird.

Das zu fertigende Werkstück wird aus dem Grundbauteil und den (wenigstens) zwei Komponenten zusammengeschweißt. Typischerweise bleibt während des Schweißens des Werkstücks die Laserleistung des Laserstrahls insgesamt zeitlich konstant (sowohl über die verschiedenen Schweißzonen, als auch innerhalb der Schweißzonen). Die erste und zweite Schweißzone sind zumindest quer zur Strahlausbreitungsrichtung voneinander beabstandet. Typischerweise liegen die beiden Schweißzonen am Werkstück in einem gleichen Abstand (in Strahlausbreitungsrichtung) zur Scanneroptik und ein etwaiger Winkelversatz zur optischen Achse der Scanneroptik ist jeweils vernachlässigbar klein (z.B. kleiner als 5°) oder für beide Schweißzonen jeweils zumindest näherungsweise gleich (z.B. mit weniger als 5° Unterschied).

Der Ringstrahl hat meist eine in Umfangsrichtung gleichbleibende Intensität (meist erzeugt durch Aufteilung eines Ausgangslaserstrahls auf eine Kernfaser und eine Ringfaser, und vielfache Reflexion des Laserlichts in der Ringfaser); es ist aber auch möglich, einen Ringstrahl mit mehreren, in Umfangsrichtung aufeinander folgenden lokalen Maxima einzusetzen (beispielsweise erzeugt mit einem DOE, diffraktives optisches Element, oder ROE, refraktives optisches Element). Die Scanneroptik ist meist als 2D-Scanneroptik gewählt, mit einer festen Fokusposition in Strahlausbreitungsrichtung vor der Scanneroptik. Typischerweise wird der Laserstrahl über ein Lichtleitkabel mit einer Kernfaser und einer Ringfaser bereitgestellt, wobei ein Kernfaserdurchmesser KFD meist im Bereich 10µm-50µm (für Single Mode) oder 50µm-400µm, insbesondere 50µm-200µm (für Multi Mode) gewählt ist, und ein (äußerer) Ringfaserdurchmesser ARFD meist im Bereich 20µm-500µm, insbesondere 40-200µm (für Single Mode), oder mit 40µm-2000µm, insbesondere 80µm-800µm (für Multi Mode) gewählt ist. Meist liegt das Verhältnis KFD:ARFD bei 1:2 bis 1:10, bevorzugt bei 1:4. Ein (vorderes) Faserende des Lichtleitkabels ist an die Scanneroptik (Bearbeitungskopf) angeschlossen. Ein (hinteres) Faserende des Lichtleitkabels ist an eine Laserquelle (Lasermodul) angeschlossen, in manchen Varianten auch an mehrere Laserquellen (Lasermodule) angeschlossen. Eine Laserquelle für die Erfindung kann für cw-Betrieb oder gepulsten Betrieb ausgebildet sein. Im Rahmen der Erfindung kann ein Single-Mode-Betrieb oder Multi-Mode-Betrieb gewählt werden.

Im Rahmen der Erfindung wird bevorzugt als Laserquelle ein Faserlaser genutzt; alternativ kann beispielsweise auch ein Scheibenlaser als Laserquelle genutzt werden.

Bevorzugte Varianten der Erfindung

Besonders bevorzugt ist eine Variante des erfindungsgemäßen Verfahrens, bei der beim Schweißen der ersten Schweißzone und beim Schweißen der zweiten Schweißzone eine Position der Scanneroptik relativ zum Werkstück gleich bleibt. Werkstück und Scanneroptik werden also nicht gegeneinander verfahren, auch nicht beim Wechsel der Schweißzone auf dem Werkstück. Dadurch kann eine sehr große Beschleunigung bei der Bearbeitung des Werkstücks und insbesondere auch einer Vielzahl von hintereinander bearbeiteten Werkstücken einer Serie erreicht werden, da ein relatives Verfahren der Scanneroptik zum Werkstück nicht erfolgt und daher auch keine Nebenzeit verursacht. Die Anpassung einer Spotgröße kann allein und schnell durch die Umschaltung der Aufteilung der Laserenergie zwischen Kernanteil und Ringanteil erfolgen. Zudem kann ein besonders einfacher Aufbau der Schweißapparatur genutzt werden, falls gewüscht, da eine entsprechende schnelle, automatisierte Verfahrmöglichkeit zwischen Werkstück und Scanneroptik grundsätzlich nicht benötigt wird.

Bevorzugt ist eine Variante des erfindungsgemäßen Verfahrens, die vorsieht, dass im zeitlichen Mittel während des Schweißens der ersten Schweißzone und des Schweißens der zweiten Schweißzone die Kernanteile der Laserenergie sich um wenigstens 20%, bevorzugt wenigstens 30%, unterscheiden. Dadurch kann eine besonders deutliche Veränderung der effektiven Spotgröße (bzw. effektiven Gesamtdurchmessers) des Laserstrahls erreicht werden. Durch das Umschalten der Verteilung der Laserenergie zwischen den Schweißzonen wird auch die Nahtbreite, entsprechend des "effektiven Gesamtdurchmessers" des Laserstrahls (etwa bestimmt nach dem 86%-Kriterium, gemessen auf der laserzugewandten Werkstückoberfläche), umgeschaltet. Typischerweise ändert sich der effektive Gesamtdurchmesser des Laserstrahls von der ersten Schweißzone zur zweiten Schweißzone ebenfalls um wenigstens 20%, bevorzugt wenigstens 30%, bezogen auf den größeren Durchmesser.

Bevorzugt ist weiterhin eine Variante, die vorsieht, dass im zeitlichen Mittel und/oder in einer Hauptphase während des Schweißens der ersten Schweißzone für den Kernanteil KA1 gilt:

$0\% \leq KA1 \leq 60\%$, bevorzugt $20\% \leq KA1 \leq 50\%$,

und dass im zeitlichen Mittel und/oder in einer Hauptphase während des Schweißens der zweiten Schweißzone für den Kernanteil KA2 gilt: $40\% \leq KA2 \leq 100\%$, bevorzugt $50\% \leq KA2 \leq 70\%$. In dieser Variante gilt grundsätzlich weiterhin auch $KA1 < KA2$, bevorzugt $KA1 \leq KA2-20\%$, besonders bevorzugt $KA1 \leq KA2-30\%$. Eine solche Aufteilung der Laserenergie hat sich in der Praxis bewährt, insbesondere für ein Schweißen einer Al-basierten ersten Komponente an der ersten Schweißzone und einer Cu-basierten zweiten Komponente an der zweiten Schweißzone.

Besonders bevorzugt ist eine Variante, bei der die erste Komponente zumindest im Bereich der ersten Schweißzone aus Al oder einer Al-Legierung besteht, und die zweite Komponente zumindest im Bereich der zweiten Schweißzone aus Cu oder einer Cu-Legierung besteht. Die erste Komponente (Al/Al-Legierung, typischerweise mit wenigstens 50 Gew% Al) kann für eine Kathode und die zweite Komponente (Cu/Cu-Legierung, typischerweise mit wenigstens 50 Gew% Cu) kann für eine Anode einer Batterie oder Batteriezelle vorgesehen sein. Das Grundbauteil kann beispielsweise aus Aluminium oder Stahl gefertigt sein. Am Grundbauteil können im Bereich der aufzuschweißenden Komponenten Terminals (lokale Beschichtungen) vorgesehen sein, insbesondere aus Al, Al-Legierungen, Cu oder Cu-Legierungen, wobei bevorzugt für eine jeweilige Komponente ein Terminal aus dem gleichen Material gewählt wird (seltener kann eine Komponente aus Al/Al-Legierung auf ein Terminal aus Cu/Cu-Legierung geschweißt werden). Die Al-Legierung kann als 1000er-Legierung gewählt werden. Die Cu-Legierung kann als CU-EPT oder CU-OF gewählt sein. Dieses Vorgehen hat sich beim Fertigen von Al-basierten und Cu-basierten Komponenten in der Praxis bewährt. Für beide Arten von Komponenten konnten mittels der Umschaltung der Energieverteilung spritzer- und porenarme Schweißnähte gefertigt werden, ohne die Scanneroptik relativ zum Werkstück zu verfahren.

Besonders bevorzugt ist eine Variante, die vorsieht,

dass das Werkstück ein Teil einer Elektrobatterie ist, insbesondere ein Deckel für eine prismatische Zelle der Elektrobatterie,
und dass die erste Komponente eine Kathode und die zweite Komponente eine Anode für die Elektrobatterie ausbilden, insbesondere wobei die erste Komponente und die zweite Komponente jeweils als gabelartiger Soft Connector für die prismatische Zelle ausgebildet sind. Mit dem erfindungsgemäßen Verfahren kann die für Elektrobatterien erforderliche, hohe Qualität der Schweißnähte bzw. hohe Zuverlässigkeit der gefertigten Batterieteile in effizienter Weise sichergestellt werden.

Bevorzugt ist zudem eine Variante, bei der beim Schweißen der ersten Schweißzone und/oder beim Schweißen der zweiten Schweißzone während einer Anfangsphase der Kernanteil der Laserenergie erhöht wird und/oder während einer Endphase der Kernanteil der Laserenergie vermindert wird. Durch solche Leistungsrampen können insbesondere Spritzer am Anfang und Poren am Ende des jeweiligen Prozesses (Schweißens einer jeweiligen Schweißzone) vermindert werden. Typischerweise bleibt beim Schweißen einer jeweiligen Schweißzone während einer Hauptphase (zwischen der Anfangsphase und der Endphase) die Aufteilung der Laserenergie konstant. Die Leistungsrampen in der Anfangsphase und in der Endphase des Schweißens einer jeweiligen Schweißzone werden typischerweise über einen Zeitraum von 5-500ms, bevorzugt 10-50ms angewandt. In einer Anfangsphase kann der Kernanteil beispielsweise bei einem Wert, der um (wenigstens) 20%, oder sogar um (wenigstens) 40%, gegenüber dem Sollwert (in der Hauptphase) vermindert ist, beginnen. In einer Endphase kann der Kernanteil beispielsweise bei einem Wert, der um (wenigstens) 20%, oder sogar um (wenigstens) 40%, gegenüber dem Sollwert (in der Hauptphase) vermindert ist, enden. Die Leistungsrampen sind typischerweise linear mit der Zeit eingerichtet.

Bevorzugt ist eine Variante, bei der zur Erzeugung des Laserstrahls ein Ausgangslaserstrahl mit einer variablen Aufteilungsvorrichtung auf den Kernstrahl und den Ringstrahl aufgeteilt wird. Dies ist besonders einfach einzurichten; insbesondere wird lediglich ein Lasermodul (eine Laserquelle) für den Ausgangslaserstrahl benötigt.

Eine bevorzugte Weiterentwicklung dieser Variante sieht vor, dass mit der variablen Aufteilungsvorrichtung der Ausgangslaserstrahl entsprechend der gewünschten Aufteilung der Laserenergie mit entsprechenden Anteilen in eine Kernfaser und in eine Ringfaser, die die Kernfaser umgibt, eingespeist wird, insbesondere wobei die variable Aufteilungsvorrichtung einen verfahrbaren optischen Keil umfasst. Über die Kernfaser und die Ringfaser können auf einfache Weise der Kernstrahl und der Ringstrahl erzeugt werden, insbesondere mit relativ gleichmäßiger Intensitätsverteilung über den jeweiligen Strahlquerschnitt, sowohl radial als auch azimuthal. Der verfahrbare optische Keil ist besonders einfach einzurichten.

In einer anderen Weiterentwicklung ist vorgesehen, dass mit der variablen Aufteilungsvorrichtung der Ausgangslaserstrahl entsprechend der gewünschten Aufteilung der Laserenergie mit entsprechenden Anteilen an einem DOE oder ROE vorbei und durch das DOE oder ROE hindurch geführt wird, insbesondere wobei das DOE oder ROE verfahrbar ist. Mit DOE (diffraktiven optischen Element) oder ROE (refraktiven optischen Element) wird der darauf entfallene Strahlanteil abgelenkt (ggf. in mehrere lokale Maxima), und dieser abgelenkte Strahlanteil stellt den Ringstrahl bereit. Der unabgelenkte Strahlanteil, der am DOE oder ROE vorbei geht, stellt den Kernanteil. Dieser Aufbau ist einfach und platzsparend zu realisieren; eine Multiclad-Faser ist nicht erforderlich.

Eine alternative, vorteilhafte Variante sieht vor, dass zur Erzeugung des Laserstrahls der Kernstrahl mit einem ersten Lasermodul erzeugt wird und der Ringstrahl mit einem zweiten Lasermodul erzeugt wird, wobei die Leistung des ersten Lasermoduls und die Leistung des zweiten Lasermoduls variabel einstellbar sind, insbesondere wobei das erste Lasermodul einen ersten Vorlaserstrahl in eine Kernfaser einspeist, und das zweite Lasermodul einen zweiten Vorlaserstrahl in eine Ringfaser, die die Kernfaser umgibt, einspeist. In dieser Variante können die Laserleistung im Kernstrahl und die Laserleistung im Ringstrahl auf besonders einfache Weise unabhängig voneinander eingestellt werden. Mittels der Kernfaser und der Ringfaser können der Kernstrahl und der Ringstrahl mit vergleichsweise gleichmäßiger Intensitätsverteilung bereitgestellt werden, sowohl azimuthal als auch radial.

In einer bevorzugten Variante ist vorgesehen, dass für die Durchmesser KSD' des Kernstrahls und ARSD' des Ringstrahls, gemessen an einer dem Laserstrahl zugewandten Werkstückoberfläche, gilt:

$$1/10 \leq KSD'/ARSD' \leq 1/2,$$

bevorzugt $1/3 \leq KSD'/ARSD' \leq 1/5$,
besonders bevorzugt KSD'/ARSD'=1/4. Diese Bereiche für den Kernstrahldurchmesser KSD' und den (äußeren) Ringstrahldurchmesser ARSD' haben sich in der Praxis bewährt, und reichen für eine Anpassung an die Gegebenheiten unterschiedlicher Komponenten (etwa auf Al-Basis und Cu-Basis) meist gut aus.

Besonders bevorzugt ist eine Variante, bei der während des Schweißens der ersten Schweißzone und der zweiten Schweißzone die Durchmesser KSD' des Kernstrahls und ARSD' des Ringstrahls, gemessen an einer dem Laserstrahl zugewandten Werkstückoberfläche, konstant bleiben. Dies ist besonders einfach einzurichten, insbesondere mit einer 2D-Scanneroptik (und von der Scanneroptik in Strahlausbreitungsrichtung gleich weit beabstandeten Schweißzonen).

In einer alternativen Variante ist vorgesehen, dass die Scanneroptik als 3D-Scanneroptik ausgebildet ist, und dass während des Schweißens der ersten Schweißzone und der zweiten Schweißzone die Durchmesser KSD' des Kernstrahls und ARSD' des Ringstrahls, gemessen an einer dem Laserstrahl zugewandten Werkstückoberfläche, mittels der 3D-Scanneroptik durch Ändern der Fokuslage in Ausbreitungsrichtung des Laserstrahls verändert werden. Dadurch kann der Bereich, innerhalb dessen die effektive Spotgröße des gesamten, bearbeitenden Laserstrahls verstellt werden kann, vergrößert werden (insbesondere bei von der Scanneroptik in Strahlausbreitungsrichtung gleich weit beabstandeten Schweißzonen). Typischerweise erfolgt das Ändern der Fokuslage nur beim Wechsel der Schweißzone.

Besonders bevorzugt ist weiterhin eine Variante, die vorsieht,

dass für den Laserstrahl beim Schweißen der ersten Schweißzone und/oder der zweiten Schweißzone in einer Fokusebene

- der Kernstrahl einen Kernstrahldurchmesser KSD aufweist, innerhalb dessen 86% der Laserleistung des Kernstrahls vorliegen,
- der Ringstrahl einen äußeren Ringstrahldurchmesser ARSD aufweist, innerhalb dessen 86% der Laserleistung des Ringstrahls vorliegen, und
- der Ringstrahl einen inneren Ringstrahldurchmesser IRSD aufweist, auf dem eine gleiche über den Umfang gemittelte Strahlungsdichte des Ringstrahls wie auf dem äußeren Ringstrahldurchmesser ARSD vorliegt, so dass sich eine Intensitätslücke zwischen dem inneren Ringstrahldurchmesser IRSD und dem Kernstrahldurchmesser KSD mit einer Intensitätslückenbreite ILB=(IRSD-KSD)/2 ergibt,

und dass ILB$\leq$0,3*KSD und ILB<10$\mu$m*AV, mit AV Abbildungsverhältnis der Scanneroptik, insbesondere wobei der Laserstrahl an einem Faserende eines Lichtleitkabels bereitgestellt wird, und das Lichtleitkabel zumindest mit einer Kernfaser mit einem Kernfaserdurchmesser KFD, einer die Kernfaser ringförmig umgebenden Ringfaser mit einem äußeren Ringfaserdurchmesser ARFD und einer zwischen Kernfaser und Ringfaser liegenden und die Kernfaser umgebenden Mantelschicht mit einer Mantelschichtdicke MSD ausgebildet ist, mit MSD$\leq$0,3*KFD sowie MSD<10$\mu$m.

Dieses Vorgehen führt zu besonders stabilen Dampfkapillaren und entsprechend zu besonders wenigen Schweißfehlern wie Spritzern, Poren oder Rissen. Insbesondere kann auch gelten MSD$\leq$0,2*KFD und/oder weiterhin ILB$\leq$0,2*KSD, bevorzugt MSD$\leq$0,15*KFD und/oder weiterhin ILB$\leq$0,15*KSD, besonders bevorzugt MSD$\leq$0,1*KFD und/oder weiterhin ILB$\leq$0,1*KSD. Weiterhin kann insbesondere gelten MSD$\leq$9$\mu$m und/oder ILB$\leq$9$\mu$m*AV, bevorzugt MSD$\leq$7$\mu$m und/oder ILB$\leq$7$\mu$m*AV, besonders bevorzugt MSD$\leq$6$\mu$m und/oder ILB$\leq$6$\mu$m*AV.

Bevorzugt ist weiterhin eine Verfahrensvariante, bei der das Schweißen der ersten Schweißzone und das Schweißen der zweiten Schweißzone so erfolgt, dass

- für eine Einschweißtiefe ET gilt 100$\mu$m $\leq$ ET $\leq$ 5mm, und/oder
- für ein Aspektverhältnis T:B einer Tiefe T zu einer Breite B einer erzeugten Schweißnaht gilt: T:B $\geq$ 0,5:1, und/oder
- für ein Strahlparameterprodukt SPP des Laserstrahls bei Single-Mode 0,38mm*mrad$\leq$SSP$\leq$16mm*mrad gilt, bevorzugt mit SSP$\leq$0,6mm*mrad, oder bei Multi-Mode SSP$\leq$100mm*mrad gilt, bevorzugt mit SSP$\leq$32mm*mrad, und/oder
- für einen Gesamtdurchmesser GD' des Laserstrahls auf der dem Laserstrahl zugewandten Werkstückoberfläche im Single-Mode 10$\mu$m$\leq$GD'$\leq$300$\mu$m gilt, bevorzugt mit 30$\mu$m$\leq$GD'$\leq$70$\mu$m, oder im Multi-Mode 50$\mu$m$\leq$GD'$\leq$1200$\mu$m gilt, und/oder
- der Laserstrahl mit wenigstens einem IR-Laser mit einer mittleren Wellenlänge MWL mit 800nm$\leq$MWL$\leq$1200nm, bevorzugt 1030nm$\leq$MWL$\leq$1070nm, oder wenigstens einem VIS-Laser, insbesondere mit einer mittleren Wellenlänge MWL mit 400nm$\leq$MWL$\leq$450nm oder 500nm$\leq$MWL$\leq$530nm, erzeugt wird, und/oder
- die Scanneroptik ein Abbildungsverhältnis AV aufweist mit 1:1 $\leq$ AV $\leq$ 5:1, bevorzugt 1,5:1 $\leq$ AV $\leq$ 2:1. Diese Parameter haben sich in der Praxis bewährt. Der (effektive) Gesamtdurchmesser GD' ("Spotgröße") kann über das 86%-Kriterium für den (gesamten) Laserstrahl bestimmt werden.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Detaillierte Beschreibung der Erfindung und Zeichnung

Fig. 1a     zeigt in schematischem Längsschnitt entlang eines Lichtleitkabels den Bereich einer beispielhaften, variablen Aufteilungsvorrichtung zur Aufteilung der Laserenergie eines Laserstrahls, für die Erfindung;

Fig. 1b     zeigt ein Faserende des Lichtleitkabels aus Fig. 1a in Aufsicht;

Fig. 2     zeigt in schematischem Längsschnitt eine beispielhafte Scanneroptik, für die Erfindung;

Fig. 3a     illustriert in einer schematischen Seitenansicht die Bearbeitung eines beispielhaften Werkstücks im Rahmen des erfindungsgemäßen Verfahrens;

Fig. 3b     zeigt eine schematische Aufsicht auf das Werkstück von Fig. 3b;

Fig. 4a     zeigt ein Diagramm einer Laserintensität eines Laserstrahls als Funktion des Ortes quer zur Strahlausbreitungsrichtung in der Fokusebene beim Laserschweißen einer ersten Komponente in einer ersten Schweißzone eines Werkstücks in einer beispielhaften Variante des erfindungsgemäßen Verfahrens;

Fig. 4b     zeigt ein schematisches Diagramm der Laserintensität des Laserstrahls als Funktion des Ortes quer zur Strahlausbreitungsrichtung in der Fokusebene beim Laserschweißen einer zweiten Komponente in einer zweiten Schweißzone des Werkstücks in der Variante von Fig. 4a;

Fig. 5     zeigt ein schematisches Diagramm des zeitlichen Verlaufs des Kernanteils beim Schweißen der ersten und zweiten Schweißzone in einer beispielhaften Erfindungsvariante;

Fig. 6     zeigt eine schematische perspektivische Ansicht eines Deckels einer prismatischen Zelle einer Elektrobatterie, der mit dem erfindungsgemäßen Verfahren geschweißt worden ist.

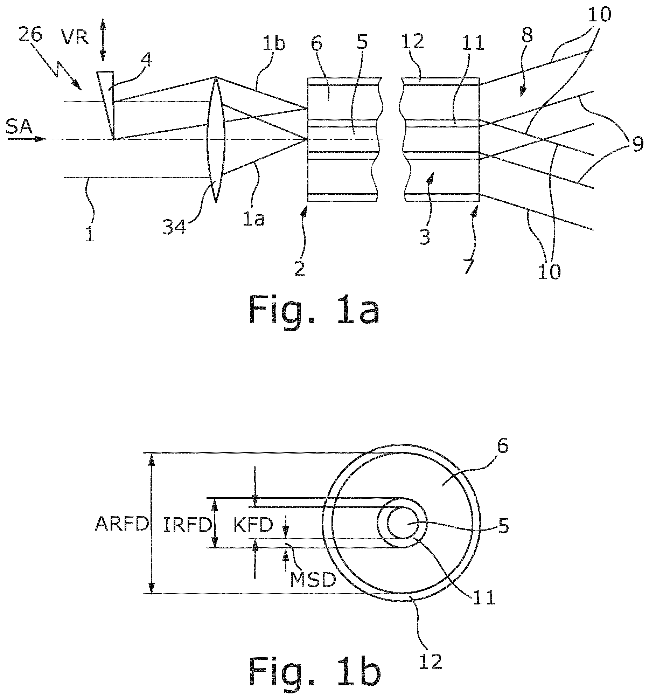

Die Figuren 1a bis 3b illustrieren verschiedene Teile eines beispielhaften Aufbaus zum Laserschweißen von Werkstücken, mit dem das erfindungsgemäße Verfahren durchgeführt werden kann.

Wie in Fig. 1a ersichtlich, wird ein Ausgangslaserstrahl 1 mittels einer Fokussierlinse 34 in ein hinteres Faserende 2 einer Multiclad-Faser 3 (die hier als Doppelclad-Faser ausgebildet ist) eingespeist. In den Strahlengang des Ausgangslaserstrahls 1 ragt ein optischer Keil 4 ein, in der gezeigten Situation radial von außen bis etwa zur Mitte des Ausgangslaserstrahls 1.

Ein erster Teil 1a des Ausgangslaserstrahls 1, der am optischen Keil 4 vorbei geführt ist (in Fig. 1a der untere Teil des Ausgangslaserstrahls 1), wird von der Fokussierlinse 34 am hinteren Faserende 2 in eine Kernfaser 5 der Multiclad-Faser 3 eingespeist. Ein zweiter Teil 1b des Ausgangslaserstrahls 1, der vom optischen Keil 4 abgelenkt wird (in Fig. 1a der obere Teil des Ausgangslaserstrahls 1), wird von der Fokussierlinse 4 am hinteren Faserende 2 in eine Ringfaser 6 der Multiclad-Faser 3 eingespeist.

An einem vorderen Faserende 7 stellt die Multiclad-Faser 3 nun einen umgeformten Laserstrahl 8 zur Verfügung. Der Laserstrahl 8 umfasst einen Kernstrahl 9, der aus der Kernfaser 5 austritt, und einen Ringstrahl 10, der aus der Ringfaser 6 austritt. Kernstrahl 9 und Ringstrahl 10 treten aus dem Faserende 7 grundsätzlich divergent aus. Die gesamte Laserenergie des Laserstrahls 8 (die im Wesentlichen der Laserenergie des Ausgangslaserstrahls 1 entspricht) teilt sich entsprechend der vom optischen Keil 4 bewirkten Aufteilung auf den Kernstrahl 9 (Kernanteil, zurückgehend auf den ersten Teil 1a) und den Ringstrahl 10 (Ringanteil, zurückgehend auf den zweiten Teil 1b) auf.

Um die Aufteilung der Laserenergie auf den Kernanteil und den Ringanteil zu ändern, kann der optische Keil 4 quer zu einer Strahlausbreitungsrichtung SA des Ausgangslaserstrahls 1 entlang einer Verfahrrichtung VR verfahren werden. Wird beispielsweise der optische Keil 4 ausgehend von der Situation von Fig. 1a nach oben gezogen (aus dem Ausgangslaserstrahl 1 weiter heraus), wird der Kernanteil erhöht und der Ringanteil verringert; wird hingegen der optische Keil 4 nach unten bewegt (weiter in den Ausgangslaserstrahl 1 hinein), so wird der Kernanteil verringert und der Ringanteil erhöht. Der optische Keil 4 im Ausgangslaserstrahl 1 vor dem hinteren Faserende 2 der Multiclad-Faser 3 bildet entsprechend eine variable Aufteilungsvorrichtung 26 aus.

Man beachte, dass in anderen Bauformen auch auf andere Weisen eine Erzeugung von Kernstrahl und Ringstrahl und auf andere Weisen eine Aufteilung einer Laserenergie auf den Kernstrahl und den Ringstrahl erfolgen kann, beispielsweise mittels mehrerer unabhängiger Lasermodulen oder auch mittels eines unterschiedlich weit in den Ausgangslaserstrahl hineinfahrbaren DOEs oder ROEs (nicht näher dargestellt).

Fig. 1b zeigt in Aufsicht das vordere Faserende 7 der Multiclad-Faser 3 von Fig. 1a. Die Kernfaser 5 ist im Querschnitt kreisrund und weist einen Kernfaserdurchmesser KFD auf, der im gezeigten Beispiel 75μm be-

trägt. Die Ringfaser 6, die die Kernfaser 5 ringförmig umgibt, ist im Querschnitt ebenfalls kreisrund und weist einen äußeren Ringfaserdurchmesser **ARFD** und einen inneren Ringfaserdurchmesser **IRFD** auf, die im gezeigten Beispiel mit ARFD=300μm und IRFD=90mm ausgebildet sind. Eine zwischen der Kernfaser 5 und der Ringfaser 6 angeordnete Mantelschicht (Cladding) **11** hat eine Mantelschichtdicke **MSD** von hier 7,5μm. Um die Ringfaser 6 außen herum ist eine weitere Mantelschicht (Cladding) **12** angeordnet. Für das Verhältnis von MSD und KFD gilt hier also ca. MSD=0,15*KFD. In einem weiteren Beispiel können z.B. auch KFD mit 75μm und ARFD mit 400μm gewählt werden.

Man beachte, dass die Geometrie des Querschnitts der Kernfaser 5 und der Ringfaser 6 im Wesentlichen dem Strahlquerschnitt des Laserstrahls 8 mit Kernstrahl 9 und Ringstrahl 10 am vorderen Faserende 7 oder auch (nach Abbildung durch die Scanneroptik) in einer Fokusebene des Laserstrahls 8 entspricht, in letzterem Fall gestreckt oder gestaucht entsprechend dem Abbildungsverhältnis AV der Abbildung. Insbesondere sind also auch Kernstrahl 9 und Ringstrahl 10 entsprechend der Fasergeometrie in Querschnitt kreisrund (siehe auch Fig. 1a hierzu).

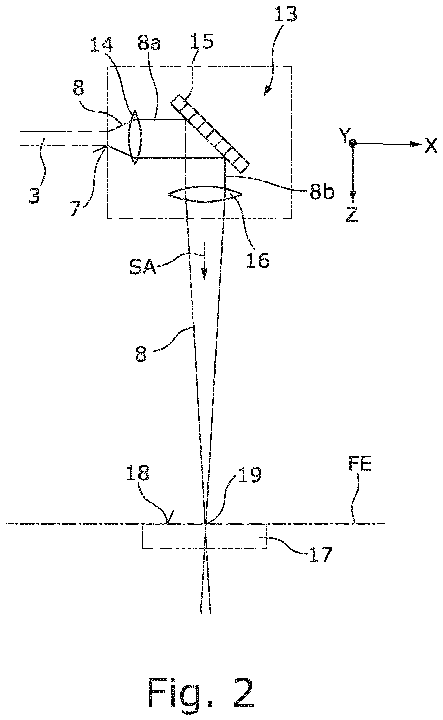

Wie in **Fig. 2** dargestellt, ist die Multiclad-Faser 3 an eine Scanneroptik **13** angeschlossen. In der gezeigten Bauform wird der am vorderen Faserende 7 austretende Laserstrahl 8 (der bereits Kernstrahl und Ringstrahl umfasst) von einer Kollimierlinse **14** kollimiert. Der kollimierte (parallelisierte) Laserstrahl **8a** trifft auf einen Scannerspiegel **15,** der um zwei Achsen verkippbar ist, im Koordinatensystem der Fig. 2 um die x-Achse und um die y-Achse (die senkrecht zur Zeichenebene verläuft; x, y, z bilden ein kartesisches Koordinatensystem). Ein reflektierter, kollimierter Laserstrahl **8b** wird sodann von einer Fokussierlinse **16** in Richtung auf ein zu schweißendes Werkstück **17** in eine Fokusebene **FE** zu fokussiert. Im illustrierten Beispiel liegt eine dem Laserstrahl 8 zugewandte Oberfläche **18** des Werkstücks 17 in der Fokusebene FE.

Durch Verschwenken des Scannerspiegels 15 kann der Laserstrahl 8 bzw. dessen Laserspot **19** auf der Oberfläche 18 des Werkstücks 17 bewegt werden, insbesondere um gewünschte Schweißnähte am Werkstück 17 abzufahren (also zu fertigen) oder auch um zwischen verschiedenen Schweißzonen am Werkstück zu wechseln, in denen jeweils eine Schweißnaht gefertigt werden soll.

Im gezeigten Beispiel liegt die Oberfläche 18 des Werkstücks 17 (zumindest dort, wo am Werkstück 17 eine Laserbearbeitung erfolgen soll) näherungsweise senkrecht zur mittleren Strahlausbreitungsrichtung SA des Laserstrahls 8; die mittlere Strahlausbreitungsrichtung SA entspricht hier im Wesentlichen der optischen Achse der Fokussierlinse 16, und liegt hier in z-Richtung.

Während der Bearbeitung des Werkstücks 17 mit dem Laserstrahl 8, einschließlich während des Wechsels zwischen Schweißzonen, bleiben die relative Position von Scanneroptik 13 und Werkstück 17 in der hier vorgestellten Variante fest, insbesondere bezüglich ihres Abstands in der z-Richtung von Fig. 2 (die entlang der Strahlausbreitungsrichtung SA verläuft). Die Scanneroptik 13 wird nicht verfahren (jedoch wird der Scannerspiegel 15 innerhalb der Scanneroptik 13 geschwenkt). In einer alternativen Variante kann auch ein relatives Verfahren zwischen Werkstück 17 und Scanneroptik 13 bei der Bearbeitung des Werkstücks 17 vorgesehen sein, wobei der relative Verfahrweg zur Einstellung einer effektiven Spotgröße beim Schweißzonenwechsel verkürzt werden kann, indem erfindungsgemäß die Aufteilung der Laserenergie umgeschaltet wird (nicht näher dargestellt).

In der gezeigten Bauform ist zudem der Abstand (in z-Richtung) der Fokusebene FE zur Scanneroptik 13 fest; die Scanneroptik 13 ist also als eine 2D-Scanneroptik ausgebildet). In einer alternativen Bauform kann die Lage der Fokusebene FE auch veränderlich zur Scanneroptik 13 sein, beispielsweise durch Verfahren der Fokussierlinse 16 in z-Richtung innerhalb der Scanneroptik 13 (nicht näher dargestellt).

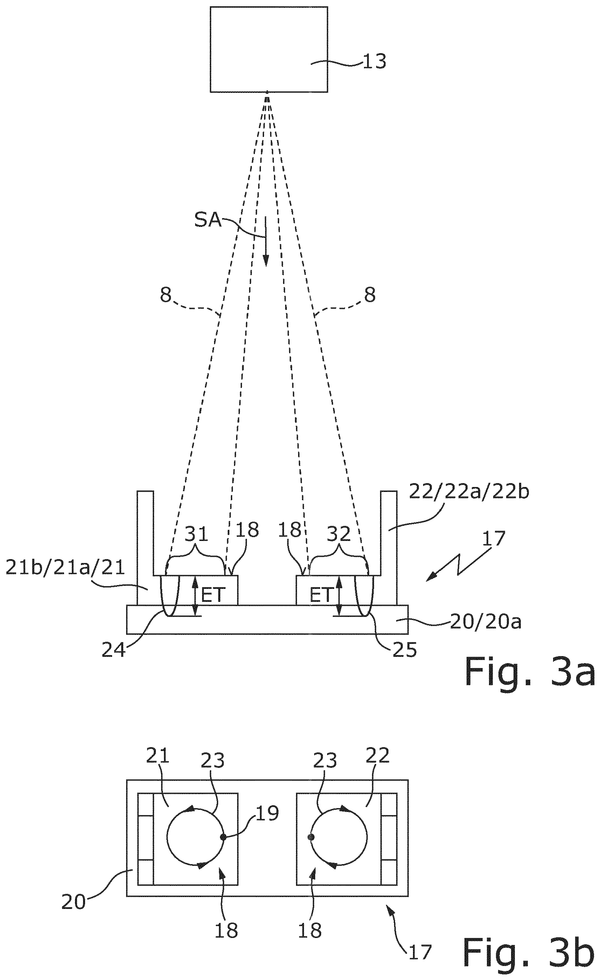

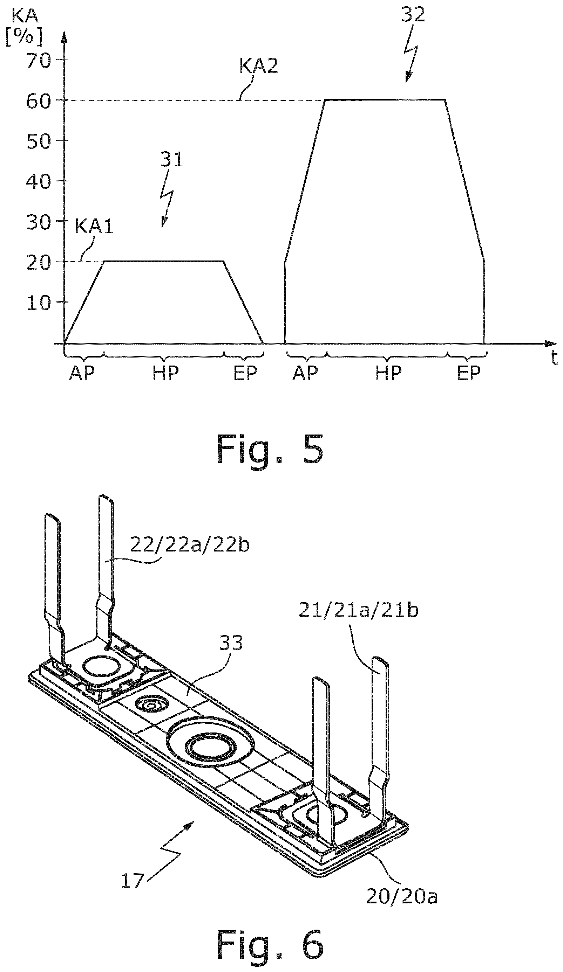

In **Fig. 3a** wird die Bearbeitung des Werkstücks 17 gemäß der Erfindung näher erläutert. Das Werkstück 17 umfasst hier ein Grundbauteil **20,** auf welchem eine erste Komponente **21** und eine zweite Komponente **22** aufgeschweißt werden sollen. Im illustrierten Beispiel ist das Grundbauteil 20 ein Deckel **20a** für eine prismatische Zelle einer Elektrobatterie, wobei der Deckel 20a hier aus einer Al-Legierung gefertigt ist. Die erste Komponente 21 ist hier eine Kathode **21a** für die Zelle, wobei die erste Komponente 21 als gabelartiger Soft Connector **21b** ausgebildet ist (vgl. hierzu auch Fig. 6); die erste Komponente 21a ist hier ebenfalls aus einer Al-Legierung gefertigt. Die zweite Komponente 22 ist hier eine Anode **22a** für die Zelle, wobei die zweite Komponente 22 wiederum als gabelartiger Soft Connector **22b** ausgebildet ist (vgl. hierzu auch Fig. 6); die zweite Komponente 22 ist hier aus einer Cu-Legierung gefertigt.

Während der Bearbeitung des Werkstücks 17 wird der von der Scanneroptik 13 ausgehende, bearbeitende Laserstrahl 8 (in beliebiger Reihenfolge) nacheinander auf eine erste Schweißzone **31** und eine zweite Schweißzone **32** gerichtet, um die erste Komponente 21 in der ersten Schweißzone 31 und die zweite Komponente 22 in der zweiten Schweißzone 32 mit dem Grundbauteil 20 zu verschweißen. In der gezeigten Variante liegen dabei die beiden Komponenten 21, 22 (bezüglich der mittleren Strahlausbreitungsrichtung SA) vor dem Grundbauteil 20; dies ist auch allgemein bevorzugt.

Wie in **Fig. 3b** ersichtlich, werden in der gezeigten Variante dabei ringförmig geschlossene Schweißnähte gefertigt, entsprechend einem jeweiligen Weg **23** des Laserspots 19 des Laserstrahls 8 auf der Oberfläche 18 des Werkstücks 17, wobei diese Oberfläche 18 hier auf den Komponenten 21, 22 liegt. Alternativ könnte beispielsweise jeweils auch eine Schraffur (Hatching) geschweißt werden (nicht näher dargestellt).

Da die beiden Komponenten 21, 22 aus unterschiedlichen Materialien bestehen, ist die Schweißwirkung eines Laserstrahls an beiden Komponenten 21, 22 grundsätzlich unterschiedlich. Dies kann sich beispielsweise in unterschiedlicher Ausbildung von Schweißdefekten (Spritzer, Poren, Risse usw.) auswirken. Die unterschiedlichen Materialien können insbesondere Auswirkungen auf eine jeweilige Einschweißtiefe **ET** haben; die Einschweißtiefe ET ist die Tiefe, in der das Material des Werkstücks 17 durch den Laserstrahl 8 aufgeschmolzen wird, vgl. hierzu die beispielhaft angedeuteten Schmelzfronten **24, 25** in Fig. 3a. Grundsätzlich ist es erwünscht, für jede Komponente 21, 22 bzw. jedes beteiligte Material die Schweißwirkung zu optimieren, und beispielsweise Schweißdefekte zu minimieren oder auch bei vielen Anwendungen eine ungefähr gleiche Einschweißtiefe ET für alle Komponenten 21, 22 zu erreichen.

Im Rahmen der Erfindung wird zu diesem Zweck bei einem Wechsel der Schweißzone 31, 32 auf dem Werkstück 17 die Energieverteilung im Laserstrahl 8 zwischen dem Kernanteil (Kernstrahl) und dem Ringanteil (Ringstrahl) umgeschaltet; hingegen bleibt in der illustrierten Variante die Position des Werkstücks 17 gegenüber der Scanneroptik 13 gleich.

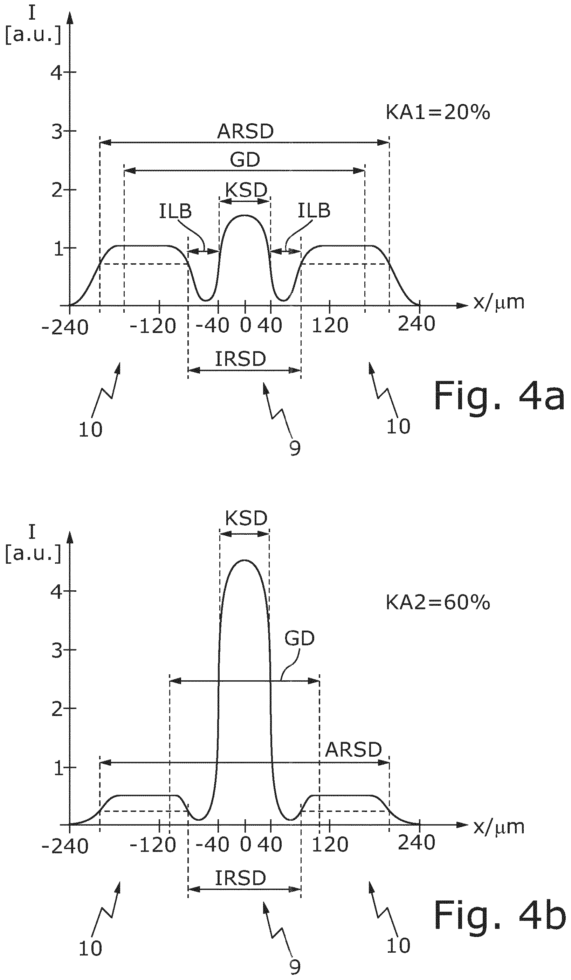

Mögliche unterschiedliche Aufteilungen von Laserenergie auf die beiden Schweißzonen 31, 32 bzw. Komponenten 21, 22, wie sie gemäß der Erfindung vorgenommen werden können, werden anhand der Figuren 4a und 4b beispielhaft erläutert. Beide Figuren zeigen jeweils ein Diagramm der lokalen Laserintensität als Funktion des Ortes entlang einer Achse x, die senkrecht zur Strahlausbreitungsrichtung liegt und durch eine Mittelachse des Laserstrahls führt ("Intensitätsprofil"). Man beachte, dass der Laserstrahl im Wesentlichen rotationssymmetrisch zu dieser Mittelachse ist.

Die Intensitätsprofile sind jeweils in der Fokusebene angegeben. Man beachte, dass die Fokusebene bevorzugt mit der laserstrahlzugewandten Werkstückoberfläche zusammenfällt; in diesem Fall entspricht das gezeigte Intensitätsprofil der Fokusebene gleichzeitig dem Intensitätsprofil auf der Werkstückoberfläche (und die gezeigten ungestrichenen Größen der Fokusebene entsprechend gleichzeitig den gestrichenen Größen der Werkstückoberfläche, z.B. KSD=KSD' usw.).

Die Intensität ist jeweils in willkürlichen Einheiten a.u. angegeben. Die Intensitätsprofile können mit einem Aufbau ähnlich wie in den Figuren 1a bis 3b erläutert erzeugt werden.

Die **Fig. 4a** zeigt ein Intensitätsprofil, wie es in der ersten Schweißzone beim Schweißen der ersten Komponente angewandt wird. Dafür wurde ein erster Kernanteil KA1 von 20% und ein erster Ringanteil RA1 von 80% als Energieaufteilung gewählt. Im Intensitätsprofil sind also ein Kernstrahl 9 und ein Ringstrahl 10 überlagert.

Der Kernstrahl 9 bewirkt ein zentrales, lokales Intensitätsmaximum, mit einer Maximalintensität von ca. 1,5 a.u.. Ein Kernstrahldurchmesser **KSD** des Kernstrahls, bestimmt nach dem 86%-Kriterium (so dass 86% der Laserleistung des Kernstrahls 9 innerhalb des Durchmessers KSD liegen), beträgt hier ungefähr 75 μm. Der Ringstrahl 10 hat beiderseits des Kernstrahlmaximums jeweils einen Plateaubereich, mit einer Maximalintensität von ca. 1,0 a.u. Ein äußerer Ringstrahldurchmesser **ARSD** des Ringstrahls 10, bestimmt nach dem 86%-Kriterium (so dass 86% der Laserleistung des Ringstrahls 10 innerhalb des Durchmessers ARSD liegen), beträgt hier ungefähr 400 μm. Am Ort von ARSD, an der Außenseite des Ringstrahls, ist die Intensität des Ringstrahls 10 bereits gegenüber der Maximalintensität des Plateaubereichs etwas abgefallen. Sucht man die entsprechende (gleiche) Intensität an der Innenseite des Ringstrahls 10 auf, so ergibt sich dadurch ein innerer Ringstrahldurchmesser **IRSD**, der hier ca. 160 μm beträgt. Im gezeigten Beispiel beträgt eine Intensitätslückenbreite **ILB** zwischen Ringstrahl 10 und Kernstrahl 9 hier ca. 43 μm, berechnet aus (160 μm-75 μm)/2 entsprechend (IRSD-KSD)/2. Man beachte, dass in anderen Ausführungsformen auch deutlich kleinere Intensitätslückenbreiten ILB gewählt werden können, insbesondere so dass ILB≤0,3*KSD.

Ein Gesamtstrahldurchmesser **GD** des gesamten Laserstrahls, also der Überlagerung von Kernstrahl 9 und Ringstrahl 10, bestimmt nach dem 86%-Kriterium (so dass 86% der Laserleistung des gesamten Laserstrahls innerhalb von GD liegen), beträgt hier ca. 340 μm. Dieser vergleichsweise große Spotdurchmesser wird hier dazu verwendet, die Al-Legierung einer Kathode als eine ersten Komponente zu verschweißen.

Sodann soll mit derselben gesamten Laserleistung eine Cu-Legierung einer Anode als zweite Komponente am selben Werkstück verschweißt werden. Dazu wird die Verteilung der Laserenergie umgeschaltet, z.B. durch Verschieben des optischen Keils wie in Fig. 1a gezeigt. Die **Fig. 4b** zeigt das Intensitätsprofil, wie es nun in der zweiten Schweißzone beim Schweißen der zweiten Komponente angewandt wird. Hierfür wird ein zweiter Kernanteil KA2 von 60% und ein zweiter Ringanteil RA2 von 40% als neue Energieaufteilung gewählt. Im Intensitätsprofil sind also wieder ein Kernstrahl 9 und ein Ringstrahl 10 überlagert. Beim Umschalten wurden hier 40% der Laserleistung vom Ringanteil auf den Kernanteil umverlagert.

Der Kernstrahl 9 bewirkt ein deutlich höheres, zentrales, lokales Intensitätsmaximum, mit einer Maximalintensität von ca. 4,5 a.u. Der Kernstrahldurchmesser KSD des Kernstrahls 9, bestimmt nach dem 86%-Kriterium, beträgt unverändert ungefähr 75 μm. Der Ringstrahl 10 hat beiderseits des Kernstrahlmaximums wieder jeweils einen Plateaubereich, jedoch mit einer deutlich niedrigeren Maximalintensität von hier ca. 0,5 a.u. Der äußere Ringstrahldurchmesser ARSD des Ringstrahls 10, bestimmt nach dem 86%-Kriterium, beträgt unverändert ungefähr 400 μm. Am Ort von ARSD ist die Intensität des Ringstrahls 10 bereits gegenüber der Maximalintensität des Plateaubereichs etwas abgefallen. Sucht man die entsprechende Intensität an der Innenseite des Ringstrahls 10 auf, so ergibt sich dadurch der innere Ringstrahldurchmesser IRSD, der ebenfalls unverändert ca. 160μm beträgt.

Der Gesamtstrahldurchmesser GD des gesamten Laserstrahls, also der Überlagerung von Kernstrahl 9 und Ringstrahl 10, bestimmt nach dem 86%-Kriterium, beträgt hier jedoch nur noch ca. 220μm. Dies liegt daran, dass nun mehr Intensität auf kleine Radien, insbesondere im Bereich des Kernstrahls 9, und weniger Laserintensität auf größere Radien entfällt. Die relativ kleine Spotgröße ist für das Schweißen der Cu-Legierung der zweiten Komponente gut geeignet.

Man beachte, dass sich die Gesamtleistung des Laserstrahls beim Umschalten nicht verändert hat.

Die **Fig. 5** illustriert einen typischen zeitlichen Verlauf der Energieverteilung eines Laserstrahls auf den Kernanteil KA und den Ringanteil RA über das Schweißen von erster Schweißzone 31 und zweiter Schweißzone 32, wie er auch im Beispiel von Fig. 4a und Fig. 4b angewandt werden kann. Aufgetragen nach rechts ist die Zeit t, und nach oben der Kernanteil KA in %; man beachte, dass KA+RA=100%.

In der ersten Schweißzone 31 wird in einer Anfangsphase **AP** der Kernanteil KA von 0% linear mit der Zeit t auf 20% erhöht. In einer Hauptphase **HP** bleibt der Kernanteil KA konstant bei 20%. In einer Endphase **EP** wird der Kernanteil KA von 20% linear mit der Zeit auf 0% abgesenkt. Durch die Leistungsrampen in der Anfangsphase AP und der Endphase EP können Schweißdefekte, insbesondere die Spritzerbildung beim Einstechen und die Porenbildung beim Ausstechen bei der ersten Komponente, reduziert werden. Man beachte, dass die Anfangsphase AP und die Endphase EP meist sehr viel kürzer sind als die Hauptphase HP (typischerweise mit AP≤0,1*HP und EP≤0,1*EP). Das Schweißen der ersten Schweißzone 31 wird daher vor allem durch die Hauptphase HP charakterisiert, und der Kernanteil KA in der Hauptphase HA wird als erster Kernanteil **KA1** bezeichnet, hier mit KA1=20%. Falls die Anfangsphase AP und die Endphase EP einen größeren Anteil haben sollten, kann KA1 alternativ auch als zeitliches Mittel des Kernanteils KA über AP, HP und EP insgesamt ermittelt werden (nicht näher dargestellt).

In der zweiten Schweißzone 32 wird in einer Anfangsphase AP der Kernanteil KA von 20% linear mit der Zeit t auf 60% erhöht. In einer Hauptphase HP bleibt der Kernanteil KA konstant bei 60%. In einer Endphase EP wird der Kernanteil EP von 60% linear mit der Zeit auf 20% abgesenkt. Durch die Leistungsrampen in der Anfangsphase AP und der Endphase EP können wiederum Schweißdefekte, insbesondere die Spritzerbildung beim Einstechen und die Porenbildung beim Ausstechen bei der zweiten Komponente, reduziert werden. Man beachte, dass die Anfangsphase AP und die Endphase EP meist sehr viel kürzer sind als die Hauptphase HP (typischerweise mit AP≤0,1*HP und EP≤0,1*EP). Das Schweißen der zweiten Schweißzone 32 wird daher vor allem durch die Hauptphase HP charakterisiert, und der Kernanteil KA in der Hauptphase HA wird als zweiter Kernanteil **KA2** bezeichnet, hier mit KA2=60%. Falls die Anfangsphase AP und die Endphase EP einen größeren Anteil haben sollten, kann KA2 alternativ auch als zeitliches Mittel des Kernanteils KA über AP, HP und EP insgesamt ermittelt werden (nicht näher dargestellt).

Im gezeigten Beispiel unterscheiden sich KA1 und KA2 um 40%. Man beachte, dass im Rahmen der Erfindung eine Differenz von wenigstens 20% bevorzugt ist, und weiter eine Differenz von wenigstens 30% besonders bevorzugt ist. Man beachte, dass in den Diagrammen von Fig. 4a, 4b zuvor jeweils die Intensitätsverteilungen aus den Hauptphasen HP gezeigt wurden.

Die **Fig. 6** zeigt ein Werkstück 17, das mit dem erfindungsgemäßen Verfahren geschweißt wurde. Das Werkstück 17 umfasst als Grundbauteil 20 einen Deckel 20a einer prismatischen Zelle einer Elektrobatterie, auf die als erste Komponente 21 eine Kathode 21a, die als gabelförmiger Soft Connector 21b aus einer Al-Legierung ausgebildet ist, und als zweite Komponente 22 eine Anode 22a, die ebenfalls als gabelförmiger Soft Connector 22b aus einer Cu-Legierung ausgebildet ist, mit dem erfindungsgemäßen Verfahren aufgeschweißt wurden. Auf dem Deckel 20a ist hier zudem noch eine Abdeckung **33** angebracht.

Bezugszeichenliste

1 Ausgangslaserstrahl
1a erster Teil (Ausgangslaserstrahl)
1b zweiter Teil (Ausgangslaserstrahl)
2 hinteres Faserende
3 Multiclad-Faser
4 optischer Keil
5 Kernfaser
6 Ringfaser
7 vorderes Faserende
8 Laserstrahl
8a kollimierter Laserstrahl
8b reflektierter Laserstrahl
9 Kernstrahl
10 Ringstrahl
11 Mantelschicht
12 weitere Mantelschicht
13 Scanneroptik
14 Kollimierlinse
15 Scannerspiegel
16 Fokussierlinse
17 Werkstück
18 Oberfläche (des Werkstücks, dem Laserstrahl zugewandt)
19 Laserspot
20 Grundbauteil
20a Deckel
21 erste Komponente

| | |
|---|---|
| 21a | Kathode |
| 21b | Soft Connector |
| 22 | zweite Komponente |
| 22a | Anode |
| 22b | Soft connector |
| 23 | Weg des Laserstrahls |
| 24 | Schmelzfront |
| 25 | Schmelzfront |
| 26 | variable Aufteilungsvorrichtung |
| 31 | erste Schweißzone |
| 32 | zweite Schweißzone |
| 33 | Abdeckung |
| 34 | Fokussierlinse |
| AP | Anfangsphase |
| ARFD | äußerer Ringfaserdurchmesser |
| ARSD | äußerer Ringstrahldurchmesser (Fokusebene) |
| EP | Endphase |
| ET | Eindringtiefe |
| FE | Fokusebene |
| GD | Gesamtdurchmesser (Fokusebene) |
| HP | Hauptphase |
| I | Intensität |
| ILB | Intensitätslückenbreite |
| IRFD | innerer Ringfaserdurchmesser |
| IRSD | innerer Ringstrahldurchmesser (Fokusebene) |
| KA | Kernanteil |
| KA1 | erster Kernanteil (Kernanteil in erster Schweißzone) |
| KA2 | zweiter Kernanteil (Kernanteil in zweiter Schweißzone) |
| KFD | Kernfaserdurchmesser |
| KSD | Kernstrahldurchmesser (Fokusebene) |
| MSD | Mantelschichtdicke |
| SA | Strahlausbreitungsrichtung |
| t | Zeit |
| VR | Verfahrrichtung |
| x | Richtung |
| y | Richtung |
| z | Richtung |

**Patentansprüche**

1. Verfahren zum Laserschweißen eines Werkstücks (17),

   wobei ein Laserstrahl (8) mittels einer Scanneroptik (13) auf das Werkstück (17) gerichtet wird, wobei mit dem Laserstrahl (8) in beliebiger Reihenfolge zumindest in einer ersten Schweißzone (31) eine erste Komponente (21) an ein Grundbauteil (20) geschweißt wird und in einer zweiten Schweißzone (32) eine zweite Komponente (22) an das Grundbauteil (20) geschweißt wird,
   und wobei die erste Komponente (21) und die zweite Komponente (22) zumindest im Bereich der ersten und zweiten Schweißzone (21, 22) aus unterschiedlichen Materialien bestehen, **dadurch gekennzeichnet,**
   **dass** eine Laserenergie des Laserstrahls (8) zumindest zwischen einem Kernanteil (KA), entsprechend einem Kernstrahl (9) des Laserstrahls, und einem Ringanteil, entsprechend einem Ringstrahl (10), der den Kernstrahl (9) umgibt, veränderlich aufteilbar ist,
   und **dass** die Aufteilung der Laserenergie auf den Kernanteil (KA) und den Ringanteil beim Schweißen der ersten Schweißzone (31) und beim Schweißen der zweiten Schweißzone (32) unterschiedlich gewählt wird.

2. Verfahren nach Anspruch 1, **dadurch gekennzeichnet, dass** beim Schweißen der ersten Schweißzone (31) und beim Schweißen der zweiten Schweißzone (32) eine Position der Scanneroptik (13) relativ zum Werkstück (17) gleich bleibt.

3. Verfahren nach Anspruch 1 oder 2, **dadurch gekennzeichnet, dass** im zeitlichen Mittel während des Schweißens der ersten Schweißzone (31) und des Schweißens der zweiten Schweißzone (32) die Kernanteile (KA) der Laserenergie sich um wenigstens 20%, bevorzugt wenigstens 30%, unterscheiden.

4. Verfahren nach einem der vorhergehenden Ansprüche, **dadurch gekennzeichnet, dass** im zeitlichen Mittel und/oder in einer Hauptphase während des Schweißens der ersten Schweißzone (31) für den Kernanteil KA1 gilt:

   $0\% \leq KA1 \leq 60\%$, bevorzugt $20\% \leq KA1 \leq 50\%$,
   und dass im zeitlichen Mittel und/oder in einer Hauptphase während des Schweißens der zweiten Schweißzone (32) für den Kernanteil KA2 gilt:
   $40\% \leq KA2 \leq 100\%$, bevorzugt $50\% \leq KA2 \leq 70\%$.

5. Verfahren nach einem der vorhergehenden Ansprüche, **dadurch gekennzeichnet, dass** die erste Komponente (21) zumindest im Bereich der ersten Schweißzone (31) aus Al oder einer Al-Legierung besteht, und die zweite Komponente (32) zumindest im Bereich der zweiten Schweißzone aus Cu oder einer Cu-Legierung besteht.

6. Verfahren nach einem der vorhergehenden Ansprüche, **dadurch gekennzeichnet,**

   **dass** das Werkstück (17) ein Teil einer Elektrobatterie ist, insbesondere ein Deckel (20a) für eine prismatische Zelle der Elektrobatterie, und **dass** die erste Komponente (21) eine Kathode (21a) und die zweite Komponente (22) eine Anode (22a) für die Elektrobatterie ausbilden, insbesondere wobei die erste Komponente (21) und die zweite Komponente (22) jeweils als gabelartiger Soft Connector (21b, 22b) für die prismatische Zelle ausgebildet sind.

7. Verfahren nach einem der vorhergehenden Ansprüche, **dadurch gekennzeichnet, dass** beim Schweißen der ersten Schweißzone (31) und/oder beim Schweißen der zweiten Schweißzone (32) während einer Anfangsphase (AP) der Kernanteil (KA) der Laserenergie erhöht wird und/oder während einer Endphase (EP) der Kernanteil (KA) der Laserenergie vermindert wird.

8. Verfahren nach einem der Ansprüche 1 bis 7, **dadurch gekennzeichnet, dass** zur Erzeugung des Laserstrahls (8) ein Ausgangslaserstrahl (1) mit einer variablen Aufteilungsvorrichtung (26) auf den Kernstrahl (9) und den Ringstrahl (10) aufgeteilt wird.

9. Verfahren nach Anspruch 8, **dadurch gekennzeichnet, dass** mit der variablen Aufteilungsvorrichtung (26) der Ausgangslaserstrahl (1) entsprechend der gewünschten Aufteilung der Laserenergie mit entsprechenden Anteilen in eine Kernfaser (5) und in eine Ringfaser (6), die die Kernfaser (5) umgibt, eingespeist wird, insbesondere wobei die variable Aufteilungsvorrichtung (26) einen verfahrbaren optischen Keil (4) umfasst.

10. Verfahren nach Anspruch 8, **dadurch gekennzeichnet, dass** mit der variablen Aufteilungsvorrichtung (26) der Ausgangslaserstrahl (1) entsprechend der gewünschten Aufteilung der Laserenergie mit entsprechenden Anteilen an einem DOE oder ROE vorbei und durch das DOE oder ROE hindurch geführt wird, insbesondere wobei das DOE oder ROE verfahrbar ist.

11. Verfahren nach einem der Ansprüche 1 bis 7, **dadurch gekennzeichnet, dass** zur Erzeugung des Laserstrahls (8) der Kernstrahl (9) mit einem ersten Lasermodul erzeugt wird und der Ringstrahl (10) mit einem zweiten Lasermodul erzeugt wird, wobei die Leistung des ersten Lasermoduls und die Leistung des zweiten Lasermoduls variabel einstellbar sind, insbesondere wobei das erste Lasermodul einen ersten Vorlaserstrahl in eine Kernfaser (5) einspeist, und das zweite Lasermodul einen zweiten Vorlaserstrahl in eine Ringfaser (6), die die Kernfaser (5) umgibt, einspeist.

12. Verfahren nach einem der vorhergehenden Ansprüche, **dadurch gekennzeichnet, dass** für die Durchmesser KSD' des Kernstrahls (9) und ARSD' des Ringstrahls (10), gemessen an einer dem Laserstrahl (8) zugewandten Werkstückoberfläche (18), gilt:

$$1/10 \leq KSD'/ARSD' \leq 1/2,$$

bevorzugt $1/3 \leq KSD'/ARSD' \leq 1/5$, besonders bevorzugt KSD'/ARSD'=1/4.

13. Verfahren nach einem der Ansprüche 1 bis 12, **dadurch gekennzeichnet, dass** während des Schweißens der ersten Schweißzone (31) und der zweiten Schweißzone (32) die Durchmesser KSD' des Kernstrahls (9) und ARSD' des Ringstrahls (10), gemessen an einer dem Laserstrahl zugewandten Werkstückoberfläche (18), konstant bleiben.

14. Verfahren nach einem der Ansprüche 1 bis 12, **dadurch gekennzeichnet, dass** die Scanneroptik (13) als 3D-Scanneroptik ausgebildet ist, und dass während des Schweißens der ersten Schweißzone (31) und der zweiten Schweißzone (32) die Durchmesser KSD' des Kernstrahls (9) und ARSD' des Ringstrahls (10), gemessen an einer dem Laserstrahl (8) zugewandten Werkstückoberfläche (18), mittels der 3D-Scanneroptik durch Ändern der Fokuslage in Ausbreitungsrichtung (SA) des Laserstrahls (8) verändert werden.

15. Verfahren nach einem der vorhergehenden Ansprüche,

dass für den Laserstrahl (8) beim Schweißen der ersten Schweißzone (31) und/oder der zweiten Schweißzone (32) in einer Fokusebene (FE)

- der Kernstrahl (9) einen Kernstrahldurchmesser KSD aufweist, innerhalb dessen 86% der Laserleistung des Kernstrahls (9) vorliegen,
- der Ringstrahl (10) einen äußeren Ringstrahldurchmesser ARSD aufweist, innerhalb dessen 86% der Laserleistung des Ringstrahls (10) vorliegen, und
- der Ringstrahl (10) einen inneren Ringstrahldurchmesser IRSD aufweist, auf dem eine gleiche über den Umfang gemittelte Strahlungsdichte des Ringstrahls (10) wie auf dem äußeren Ringstrahldurchmesser ARSD vorliegt, so dass sich eine Intensitätslücke zwischen dem inneren Ringstrahldurchmesser IRSD und dem Kernstrahldurchmesser KSD mit einer Intensitätslückenbreite ILB=(IRSD-KSD)/2 ergibt,

und dass ILB$\leq$0,3*KSD und ILB<10$\mu$m*AV, mit AV Abbildungsverhältnis der Scanneroptik (13), insbesondere wobei der Laserstrahl (8) an einem Faserende (7) eines Lichtleitkabels (3) bereitgestellt wird, und das Lichtleitkabel (3) zumindest mit einer Kernfaser (5) mit einem Kernfaserdurchmesser KFD, einer die Kernfaser (5) ringförmig umgebenden Ringfaser (6) mit einem äußeren Ringfaserdurchmesser ARFD und einer zwischen Kernfaser (5) und Ringfaser (6) liegenden und die Kernfaser (5) umgebenden Mantelschicht (11) mit einer Mantelschichtdicke MSD ausgebildet ist, mit MSD$\leq$0,3*KFD sowie MSD<10$\mu$m.

16. Verfahren nach einem der vorhergehenden Ansprüche, **dadurch gekennzeichnet, dass** das Schweißen der ersten Schweißzone (31) und das Schweißen der zweiten Schweißzone (32) so erfolgt, dass

- für eine Einschweißtiefe ET gilt 100$\mu$m $\leq$ ET $\leq$ 5mm, und/oder
- für ein Aspektverhältnis T:B einer Tiefe T zu einer Breite B einer erzeugten Schweißnaht gilt: T:B $\geq$ 0,5:1, und/oder
- für ein Strahlparameterprodukt SPP des Laserstrahls (8) bei Single-Mode 0,38mm*mrad$\leq$SSP$\leq$16mm*mrad gilt, bevorzugt mit SSP$\leq$0,6mm*mrad, oder bei Multi-Mode SSP$\leq$100mm*mrad gilt, bevorzugt mit SSP$\leq$32mm*mrad, und/oder
- für einen Gesamtdurchmesser GD' des Laserstrahls (8) auf der dem Laserstrahl (8) zugewandten Werkstückoberfläche (18) im Single-Mode 10$\mu$m$\leq$GD'$\leq$300$\mu$m gilt, bevorzugt mit 30$\mu$m$\leq$GD'$\leq$70$\mu$m, oder im Multi-Mode 50$\mu$m$\leq$GD'$\leq$1200$\mu$m gilt, und/oder
- der Laserstrahl (8) mit wenigstens einem IR-Laser mit einer mittleren Wellenlänge MWL mit 800nm$\leq$MWL$\leq$1200nm, bevorzugt 1030nm$\leq$MWL$\leq$1070nm, oder wenigstens einem VIS-Laser, insbesondere mit einer mittleren Wellenlänge MWL mit 400nm$\leq$MWL$\leq$450nm oder 500nm$\leq$MWL$\leq$530nm, erzeugt wird, und/oder
- die Scanneroptik (13) ein Abbildungsverhältnis AV aufweist mit 1:1 $\leq$ AV $\leq$ 5:1, bevorzugt 1,5:1 $\leq$ AV $\leq$ 2:1.

## Claims

1. A method for laser welding a workpiece (17),

wherein a laser beam (8) is directed onto the workpiece (17) by means of scanner optics (13), wherein, using the laser beam (8) and in any order, a first component (21) is welded to a base part (20) at least in a first welding zone (31) and a second component (22) is welded to the base part (20) in a second welding zone (32),

and wherein the first component (21) and the second component (22) consist of different materials, at least in the region of the first and the second welding zone (21, 22),

**characterized in that**

a laser energy of the laser beam (8) can be variably split up at least between a core portion (KA) corresponding to a core beam (9) of the laser beam and an annular portion corresponding to an annular beam (10) surrounding the core beam (9),

and **in that** the splitting-up of the laser energy into the core portion (KA) and the annular portion is selected differently during the welding of the first welding zone (31) and during the welding of the second welding zone (32).

2. The method according to claim 1, **characterized in that** a position of the scanner optics (13) relative to the workpiece (17) remains the same during welding of the first welding zone (31) and during welding of the second welding zone (32).

3. The method according to claim 1 or 2, **characterized in that** the core portions (KA) of the laser energy differ by at least 20%, preferably at least 30%, as a time average, during the welding of the first welding zone (31) and the welding of the second welding zone (32).

4. The method according to any one of the preceding claims, **characterized in that** the following applies for the core portion KA1, as a time average and/or in a main phase during the welding of the first welding zone (31):

0%$\leq$KA1$\leq$60%, preferably 20%$\leq$KA1$\leq$50%, and **in that** the following applies for the core portion KA2, as a time average and/or in a main phase during the welding of the second welding zone (32): 40%$\leq$KA2$\leq$100%, preferably 50%$\leq$KA2$\leq$70%.

5. The method according to any one of the preceding claims, **characterized in that** the first component (21) consists of Al or an Al alloy, at least in the region of the first welding zone (31), and the second component (32) consists of Cu or a Cu alloy, at least in the region of the second welding zone.

6. The method according to any one of the preceding claims, **characterized in that**,

the workpiece (17) is a part of an electric battery, in particular a cover (20a) for a prismatic cell of the electric battery, and **in that** the first component (21) forms a cathode (21a) and the second component (22) forms an anode (22a) for the electric battery, in particular wherein the first component (21) and the second component (22) are each designed as fork-like soft connectors (21b, 22b) for the prismatic cell.

7. The method according to any one of the preceding claims, **characterized in that**, during the welding of the first welding zone (31) and/or during the welding of the second welding zone (32) the core portion (KA) of the laser energy is increased during an initial phase (AP) and/or the core portion (KA) of the laser energy is reduced during an end phase (EP).

8. The method according to any one of claims 1 to 7, **characterized in that** in order to generate the laser beam (8) a starting laser beam (1) is split up into the core beam (9) and the annular beam (10) using a variable splitting device (26).

9. The method according to claim 8, **characterized in that**, using the variable splitting device (26) the starting laser beam (1) is fed in in correspondence to the desired splitting up of the laser energy, with corresponding portions, into a core fiber (5) and into an annular fiber (6) surrounding the core fiber (5), in particular wherein the variable splitting device (26) comprises a displaceable optical wedge (4).

10. The method according to claim 8, **characterized in that**, using the variable splitting device (26), the starting laser beam (1) is guided, in correspondence to the desired splitting up of the laser energy, with corresponding portions, past the DOE or ROE and through the DOE or ROE, in particular wherein the DOE or ROE is displaceable.

11. The method according to any one of claims 1 to 7, **characterized in that** to generate the laser beam (8) the core beam (9) is generated using a first laser module and the annular beam (10) is generated using a second laser module, wherein the power of the first laser module and the power of the second laser module are variably adjustable, in particular wherein the first laser module feeds in a first pre-laser beam into a core fiber (5) and the second laser module feeds in a second pre-laser beam into an annular fiber (6) surrounding the core fiber (5).

12. The method according to any one of the preceding claims, **characterized in that** the following applies for the diameters KSD' of the core beam (9) and ARSD' of the annular beam (10), measured at a workpiece surface (18) facing the laser beam (8):

$$1/10 \leq KSD'/ARSD' \leq 1/2,$$

preferably $1/3 \leq KSD'/ARSD' \leq 1/5$, particularly preferably KSD'/ARSD'=1/4.

13. The method according to any one of claims 1 to 12, **characterized in that** the diameters KSD' of the core beam (9) and ARSD' of the annular beam (10), measured on a workpiece surface (18) facing the laser beam, remain constant during the welding of the first welding zone (31) and the second welding zone (32).

14. The method according to any one of claims 1 to 12, **characterized in that** the scanner optics (13) are designed as 3D scanner optics and that the diameters KSD' of the core beam (9) and ARSD' of the annular beam (10), measured on a workpiece surface (18) facing the laser beam (8), are changed during the welding of the first welding zone (31) and the second welding zone (32) by means of the 3D scanner optics by changing the focal length in the direction of propagation (SA) of the laser beam (8).

15. The method according to any one of the preceding claims,

**characterized in that** for the laser beam (8), during welding of the first welding zone (31) and/or the second welding zone (32) in a focal plane (FE),

- the core beam (9) has a core beam diameter KSD within which 86% of the laser power of the core beam (9) exists,
- the annular beam (10) has an outer annular beam diameter ARSD within which 86% of the laser power of the annular beam (10) exists, and
- the annular beam (10) has an inner annular beam diameter IRSD at which a beam density of the annular beam (10), averaged over the circumference, is the same as that existing at the outer annular beam diameter ARSD such that an intensity gap results between the inner annular beam diameter IRSD and the core beam diameter KSD, with an intensity gap width ILB=(IRSD-KSD)/2,

and that ILB≤0.3*KSD and ILB<10μm*AV, where AV is the imaging ratio of the scanner optics (13),

in particular wherein the laser beam (8) is provided at a fiber end (7) of a fiber optic cable (3), and the fiber optic cable (3) is designed at least with a core fiber (5) with a core fiber diameter KFD, an annular fiber (6) surrounding the core fiber (5) annularly, with an outer annular fiber diameter ARFD and a sheath layer (11) lying between the core fiber (5) and the annular fiber (6) and surrounding the core fiber (5), with a sheath layer thickness MSD, where MSD≤0.3*KFD and MSD<10μm.

16. The method according to any one of the preceding claims, **characterized in that** the welding of the first welding zone (31) and the welding of the second welding zone (32) takes place such that

- for a welding penetration depth ET, the following applies: 100μm ≤ ET ≤ 5mm, and/or
- for an aspect ratio T:B of a depth T relative to a width B of a generated weld seam, the following applies: T:B ≥ 0.5:1, and/or
- for a beam parameter product SPP of the laser beam (8) in single mode, 0.38mm*mrad≤SSP≤16mm*mrad applies, preferably at SSP≤0.6mm*mrad, or in multi mode, SSP≤100mm*mrad applies, preferably at SSP≤32mm*mrad, and/or
- for a total diameter GD' of the laser beam (8) on the workpiece surface (18) facing the laser beam (8) in single mode, 10μm≤GD'≤300μm applies, preferably at 30μm≤GD'≤70μm, or in multi mode 50μm≤GD'≤1200μm applies, and/or
- the laser beam (8) with at least one IR laser, is generated with an average wavelength MWL at 800nm≤MWL≤1200nm, preferably 1030nm≤MWL≤1070nm, or with at least one VIS laser, in particular with an average wavelength MWL at 400nm≤MWL≤450nm or 500nm≤MWL≤530nm, and/or
- the scanner optics (13) have an imaging ratio AV at 1:1 ≤ AV ≤ 5:1, preferably 1.5:1 ≤ AV ≤ 2:1.

**Revendications**

1. Procédé de soudage laser d'une pièce (17),

dans lequel un faisceau laser (8) est dirigé sur la pièce (17) au moyen d'une optique de scanner (13),
dans lequel, au moyen du faisceau laser (8), une première composante (21) est soudée, au moins dans une première zone de soudage (31), à un élément de base (20) dans un ordre quelconque, et, dans une deuxième zone de soudage (32), une deuxième composante (22) est soudée à l'élément de base (20),
et dans lequel la première composante (21) et la deuxième composante (22) sont constituées de matériaux différents, au moins dans la région de la première et de la deuxième zone de soudage (21, 22),
**caractérisé**
**en ce que** l'énergie laser du faisceau laser (8) peut être répartie de manière variable, au moins entre une part de cœur (KA), correspondant à un faisceau de cœur (9) du faisceau laser, et une part annulaire, correspondant à un faisceau annulaire (10) entourant le faisceau de cœur (9), et **en ce que** la répartition de l'énergie laser entre la part de cœur (KA) et la part annulaire est choisie de manière différente lors du soudage de la première zone de soudage (31) et lors du soudage de la deuxième zone de soudage (32).

2. Procédé selon la revendication 1, **caractérisé en ce que**, lors du soudage de la première zone de soudage (31) et lors du soudage de la deuxième zone de soudage (32), une position de l'optique de scanner (13) par rapport à la pièce (17) reste identique.

3. Procédé selon la revendication 1 ou 2, **caractérisé en ce que**, en moyenne temporelle pendant le soudage de la première zone de soudage (31) et le soudage de la deuxième zone de soudage (32), les parts de cœur (KA) de l'énergie laser diffèrent d'au moins 20 %, de préférence d'au moins 30 %.

4. Procédé selon l'une quelconque des revendications précédentes, **caractérisé en ce que**, en moyenne temporelle et/ou dans une phase principale pendant le soudage de la première zone de soudage (31), pour la part de cœur KA1, il est satisfait à :

0%≤KA1≤60%, de préférence 20%≤KA1≤50%, et que, en moyenne temporelle et/ou dans une phase principale pendant le soudage de la deuxième zone de soudage (32), pour la part de cœur KA2, il est satisfait à :
40%≤KA2≤100%, de préférence 50%≤KA2≤70%.

5. Procédé selon l'une quelconque des revendications précédentes, **caractérisé en ce que** la première composante (21) est constituée d'Al ou d'un alliage d'Al au moins dans la région de la première zone de soudage (31), et que la deuxième composante (32) est constituée d'au moins du Cu ou d'un alliage de Cu dans la région de la deuxième zone de soudage.

6. Procédé selon l'une quelconque des revendications précédentes, **caractérisé en ce que** la pièce (17) est une partie d'une batterie électrique, en particulier un couvercle (20a) pour une cellule prismatique de la batterie électrique,
et **en ce que** la première composante (21) forme une cathode (21a) et la deuxième composante (22) forme une anode (22a) pour la batterie électrique, en particulier dans lequel la première composante (21) et la deuxième composante (22) sont chacune réalisées sous forme d'un connecteur souple en forme de fourche (21b, 22b) pour la cellule prismatique.

7. Procédé selon l'une quelconque des revendications précédentes, **caractérisé en ce que**, lors du soudage de la première zone de soudage (31) et/ou lors du soudage de la deuxième zone de soudage (32), pendant une phase initiale (AP), la part de cœur (KA) de l'énergie laser est augmentée et/ou pendant une phase finale (EP), la part de cœur (KA) de l'énergie laser est réduite.

8. Procédé selon l'une quelconque des revendications 1 à 7, **caractérisé en ce que**, pour générer le faisceau laser (8), un faisceau laser de sortie (1) est réparti, au moyen d'un dispositif de répartition variable (26), entre le faisceau de cœur (9) et le faisceau annulaire (10).

9. Procédé selon la revendication 8, **caractérisé en ce qu'**au moyen du dispositif de répartition variable (26), le faisceau laser de sortie (1) est injecté, conformément à la répartition souhaitée de l'énergie laser, avec des parts correspondantes, dans une fibre de cœur (5) et dans une fibre annulaire (6) entourant la fibre de cœur (5), en particulier dans lequel le dispositif de répartition variable (26) comprend un coin optique déplaçable (4).

10. Procédé selon la revendication 8, **caractérisé en ce qu'**au moyen du dispositif de répartition variable (26), le faisceau laser de sortie (1) est guidé, conformément à la répartition souhaitée de l'énergie laser, avec des parts correspondantes, le long d'un DOE ou ROE et à travers le DOE ou ROE, en particulier dans lequel le DOE ou ROE est déplaçable.

11. Procédé selon l'une quelconque des revendications 1 à 7, **caractérisé en ce que**, pour générer le faisceau laser (8), le faisceau de cœur (9) est généré par un premier module laser et le faisceau annulaire (10) est généré par un deuxième module laser, dans lequel la puissance du premier module laser et la puissance du deuxième module laser sont réglables de manière variable, en particulier dans lequel le premier module laser injecte un premier faisceau laser en amont dans une fibre de cœur (5), et le deuxième module laser injecte un deuxième faisceau laser en amont dans une fibre annulaire (6) entourant la fibre de cœur (5).

12. Procédé selon l'une quelconque des revendications précédentes, **caractérisé en ce que**, pour les diamètres KSD' du faisceau de cœur (9) et ARSD' du faisceau annulaire (10), mesurés sur une surface de pièce (18) tournée vers le faisceau laser (8), il est satisfait à :

$$1/10 \leq KSD'/ARSD' \leq 1/2,$$

de préférence $1/3 \leq KSD'/ARSD' \leq 1/5$, particulièrement de préférence $KSD'/ARSD' = 1/4$.

13. Procédé selon l'une quelconque des revendications 1 à 12, **caractérisé en ce que**, pendant le soudage de la première zone de soudage (31) et de la deuxième zone de soudage (32), les diamètres KSD' du faisceau de cœur (9) et ARSD' du faisceau annulaire (10), mesurés sur une surface de pièce (18) tournée vers le faisceau laser, restent constants.

14. Procédé selon l'une quelconque des revendications 1 à 12, **caractérisé en ce que** l'optique de scanner (13) est réalisée en tant qu'optique de scanner 3D, et que, pendant le soudage de la première zone de soudage (31) et de la deuxième zone de soudage (32), les diamètres KSD' du faisceau de cœur (9) et ARSD' du faisceau annulaire (10), mesurés sur une surface de pièce (18) tournée vers le faisceau laser (8), sont modifiés au moyen de l'optique de scanner 3D en changeant la position focale dans la direction de propagation (SA) du faisceau laser (8).

15. Procédé selon l'une quelconque des revendications précédentes,

> **caractérisé en ce que**, pour le faisceau laser (8) lors du soudage de la première zone de soudage (31) et/ou de la deuxième zone de soudage (32), dans un plan focal (FE)
>
>> - le faisceau de cœur (9) présente un diamètre de faisceau de cœur KSD, à l'intérieur duquel se trouvent 86 % de la puissance laser du faisceau de cœur (9),
>> - le faisceau annulaire (10) présente un diamètre externe de faisceau annulaire ARSD, à l'intérieur duquel se trouvent 86 % de la puissance laser du faisceau annulaire (10), et
>> - le faisceau annulaire (10) présente un diamètre interne de faisceau annulaire IRSD, sur lequel une densité de rayonnement du faisceau annulaire (10), moyenne sur la circonférence, identique à celle au diamètre externe de faisceau annulaire ARSD est présente, de sorte qu'il en résulte une lacune d'intensité entre le diamètre interne de faisceau annulaire IRSD et le diamètre de faisceau de cœur KSD, avec une largeur de lacune d'intensité ILB=(IRSD-KSD)/2,

et **en ce que** ILB≤0,3*KSD et ILB<10μm*AV, AV étant le rapport d'imagerie de l'optique de scanner (13),

en particulier dans lequel le faisceau laser (8) est fourni à une extrémité de fibre (7) d'un câble à fibres optiques (3), et le câble à fibres optiques (3) est réalisé au moins avec une fibre de cœur (5) ayant un diamètre de fibre de cœur KFD, une fibre annulaire (6) entourant en anneau la fibre de cœur (5) ayant un diamètre externe de fibre annulaire ARFD, et une couche de gaine (11) située entre la fibre de cœur (5) et la fibre annulaire (6) et entourant la fibre de cœur (5), avec une épaisseur de gaine MSD, avec MSD≤0,3*KFD ainsi que MSD<10μm.

16. Procédé selon l'une quelconque des revendications précédentes, **caractérisé en ce que** le soudage de la première zone de soudage (31) et le soudage de la deuxième zone de soudage (32) sont réalisés de telle sorte que :

- pour une profondeur de pénétration du soudage ET, il est satisfait à 100 μm ≤ ET ≤ 5 mm, et/ou
- pour un rapport d'aspect T:B d'une profondeur T à une largeur B d'un cordon de soudure généré, il est satisfait à : T:B ≥ 0,5:1, et/ou
- pour un produit de paramètre de faisceau SPP du faisceau laser (8), il est satisfait en monomode à 0,38mm*mrad≤SSP≤16mm*mrad, de préférence avec SSP≤0,6mm*mrad, ou en multimode à SSP≤100mm*mrad, de préférence avec SSP≤32mm*mrad, et/ou
- pour un diamètre total GD' du faisceau laser (8) sur la surface de pièce (18) tournée vers le faisceau laser (8), il est satisfait en monomode à 10μm≤GD'≤300μm, de préférence avec 30μm≤GD'≤70μm, ou en multimode à 50μm≤GD'≤1200μm, et/ou
- le faisceau laser (8) est généré au moyen d'au moins un laser IR ayant une longueur d'onde moyenne MWL compris entre 800nm≤MWL≤1200nm, de préférence 1030nm≤MWL≤1070nm, ou au moyen d'au moins un laser VIS, en particulier avec une longueur d'onde moyenne MWL compris entre 400nm≤MWL≤450nm ou 500nm≤MWL≤530nm, et/ou
- l'optique de scanner (13) présente un rapport d'imagerie AV compris entre 1:1 ≤ AV ≤ 5:1, de préférence 1,5:1 ≤ AV ≤ 2:1.

Fig. 1a

Fig. 1b

EP 4 415 919 B1

Fig. 2

19

Fig. 3a

Fig. 3b

Fig. 4a

Fig. 4b

## Fig. 5

## Fig. 6

**IN DER BESCHREIBUNG AUFGEFÜHRTE DOKUMENTE**

**In der Beschreibung aufgeführte Patentdokumente**

- DE 102010003750 A1
- CN 207353371 U
- CN 102637835 A
- DE 102019218398 A1